# EUROPEAN PATENT APPLICATION

(11) **EP 2 348 420 A1**
(43) Date of publication of application: **27.07.2011**
(21) Application number: 10197045.7
(22) Date of filing: 27.12.2010
(51) Int. Cl.: G06F 13/38

(54) **USB flash memory data storage device**

(30) Priority: 28.12.2009 UY 4313 U
(71) Applicant: De Leon, Fernando, Montevideo (UY)
(72) Inventor: De Leon, Fernando, Montevideo (UY)
(74) Representative: Elzaburu Marquez, Alberto

(57) **Abstract**

A USB flash drive including two USB connectors at the ends of the main body thereof that is able to perform different functions. This storage device also includes an LCD display, headphone jack, and internal or removable battery.

## Description

This utility model patent belongs to the field of the processing, transmission and storage of information that so far was possible by using a pendrive, among other media. This patent application offers an alternative to this, at the time that explores a new and simple way to manage information.

The I - PEN consists of an electronic Universal Serial Bus (USB) storage device, also called "USB flash drive" or "pendrive", which allows the processing and mass storage of information in electronic storage units called files, which may be of different sizes. The processing of the information may be done from a computer, from the device itself or from another FLASH storage drive. The utility model of the I - PEN has a male USB connector and a female USB connector, which allow the transfer of information between two pendrives regardless of the use of a computer. Finally, in the patent application there appears an LCD, LED or similar display that enable the user to see and locate the different text files stored in the electronic USB flash drive or pendrive, among other functions detailed below.

In the current state of the art, regarding the transmission, processing and storage of information of any kind, no device was found that contains all the features mentioned in this opportunity. This arises from the research carried out in the Uruguayan National Direction of Industrial Property (Dirección Nacional de la Propiedad Industrial). Regardless of this fact, we are aware that both in the technological field as well as in the processing, storage and transmission or communication of information the advances are constant and there is an ongoing evolution.

We have sought advice from engineers with expertise in the area, as well as from importers and distributors of similar products, and nothing appeared to be similar to this model that features in a single product a male USB, a female USB and a LCD or similar display.

As of today, in the current state of the art and therefore in the national and international market, there are hundreds of devices based on a storage unit to which the user can access through an interface for human use. These devices are capable of storing great quantities of files of different kinds for its transmission or direct use. We know there are some devices of this kind that are capable of directly playing audio files as well as some others capable of directly playing video files, images and text, always incorporating a built-in display (LCD, LED or similar).

Such devices usually get connected to computers using the USB (Universal Serial Bus) protocol in order to exchange files. This is the only possible way to send or receive information, that is, from a USB connector to a computer or from a computer to a USB connector.

The advance proposed by the device described in this utility model application consists of including a female USB in addition to the male USB (which is usual in most storage devices). The inclusion of this female USB connector allows sending and receiving information and any kind of data to and from other storage devices without the need of using a computer. The inclusion of this feature in the storage devices enables the independence from computers to a great extent, which represents an important advantage over the existing storage devices. To apply this advance, it is necessary that the device that gets connected to the model presented in this opportunity has a male USB connector.

At present, common USD devices on the market can only transfer or receive information to or from a computer. This condition severely restricts the use of the pendrive that cannot exchange information if it is not in the same place the computer is. The product presented in this utility model patent overcomes this problem as it incorporates a female USB connector that enables the exchange with other devices that contain an electronic USB FLASH drive without the need of using a computer.

The product presented in this opportunity has other additional advantages.

It also includes the transfer of files to and from other devices through Bluetooth and Infrared technology, provided that the other devices allow doing that.

In addition, it displays multimedia features, enabling to play audio and video files, outputting the audio through headphones or a built-in speaker, and playing videos through a built-in LCD, LED or similar display. It is also possible to view stored text files through such display. The processing of multimedia files is performed by the different function keys of the device: play, fast forward, rewind, stop, pause, etc. This kind of display usually appears in music players but it is not commonly incorporated in a pendrive so as to find the information and then transfer it to the desired USB connector.

Another advantage of the patent submitted is the Hold switch. Once the Hold switch is moved to the hold position all function keys are disabled and have no effect on the system.

The device includes the basic on/off function that is controlled by the ON/OFF switch.

It also enables audio output through a Frequency Modulation (FM) Modulator where the desired frequency can be selected. The user may tune it in a receiver device to hear the sound of the audio.

These devices may be powered by an internal battery or a removable one. These batteries may be charged directly - if they allow it - through the male USB connector of the device, without the need of an external battery charger.

The storage capacity of these devices can be increased by inserting external memory cards such as micro SD or similar. USB flash drives implement the USB Mass Storage Device Class standard. It is by this standard that most operative systems are able to read and write in such storage devices without additional controllers. Supported speeds are: USB 1.0/1.1 from 1.5 Mbps to 12 Mbps; USB 2.0 up to 480 Mbps; USB 3.0 up to 5 Gbps.

The I - PEN is a new product obtained from the introduction of a new conformation in a work instrument or device - specifically an electronic USB FLASH drive - that results in better use or better result for the function it is intended for. In addition, we believe this is a novel device for as it is not in the state of the art research. Finally, this product involves an inventive step.

### Detailed description of the invention

The description of the invention submitted in this opportunity is not essential but we believe it is appropriate to show a clarifying figure for a better understanding of what is being discussed. This figure shows clearly and completely the device to be patented and facilitates its reproduction and manufacturing.

This USB Flash drive includes the features listed below. For a better understanding we add the appended image.

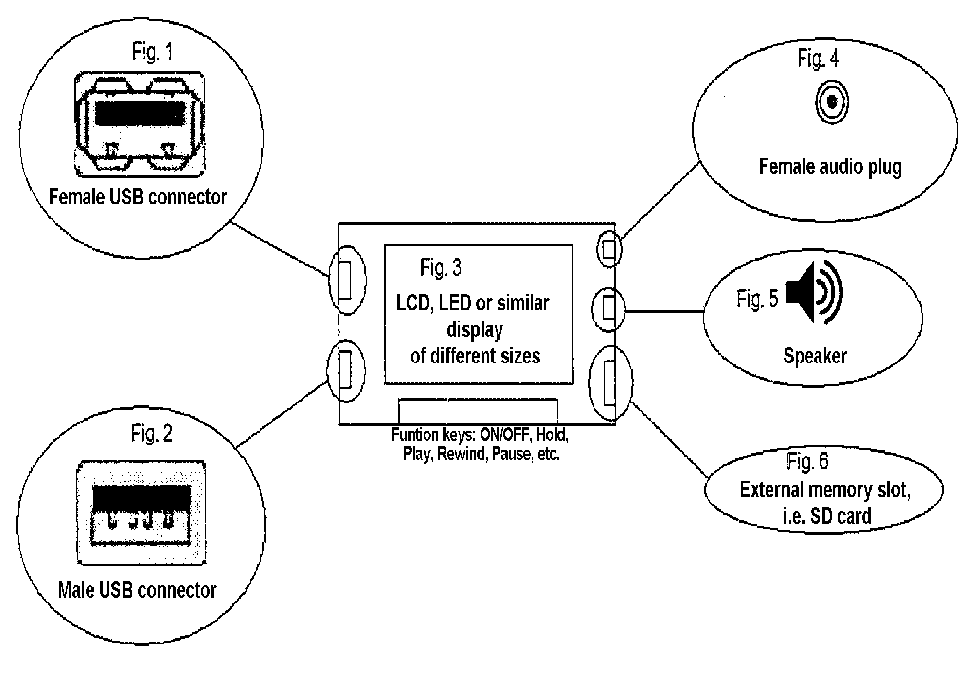

Figure 1: Female USB connector
Figure 2: Male USB connector
Figure 3: LCD, LED or similar display of different sizes
Figure 4: Function keys: ON/OFF, Hold, Play, Rewind, Pause, etc.
Figure 5: External memory slot, i.e. SD card.

## Claims

1. A USB flash memory data storage device comprising a main body and two USB connectors, a male one and a female one, either at the same end or at opposite ends of the main body.

2. A USB flash memory data storage device according to claim 1 further comprising a LCD, LED or similar display in the main body having a variable size in accordance with the size of the main body.

3. A USB flash memory data storage device according to claims 1 or 2 further comprising an external memory card such as micro SD or similar.

4. A USB flash memory data storage device according to any one of the previous claims further comprising an internal or external battery.

5. A USB flash memory data storage device according to claim 4 wherein the battery is configured to be charged through one of the USB ports.

6. A USB flash memory data storage device according to any one of the previous claims further comprising means to play audio and/or video files.

7. A USB flash memory data storage device according to any one of the previous claims further comprising means to output the video through the display.

8. A USB flash memory data storage device according to any one of the previous claims further comprising means to output the audio through headphones.

9. A USB flash memory data storage device according to any one of claims 1-7 further comprising means to output the audio through a Frequency Modulation (FM) Modulator.

10. A USB flash memory data storage device according to any one of claims 1-7 further comprising means to output the audio through a built-in speaker.

11. A USB flash memory data storage device according to any one of the previous claims further comprising means to transfer files to and from other devices using Bluetooth or Infrared technology.
